# EUROPÄISCHE PATENTSCHRIFT

(11) **EP 2 623 183 B1**
(45) Veröffentlichungstag und Bekanntmachung des Hinweises auf die Patenterteilung: **26.08.2015**
(21) Anmeldenummer: 12153774.0
(22) Anmeldetag: 03.02.2012
(51) Int. Cl.: B01D 53/94, F01N 3/035, B01J 37/02

(54) **KATALYTISCH AKTIVES PARTIKELFILTER UND DESSEN VERWENDUNG**
CATALYTICALLY ACTIVE PARTICULATE FILTER AND USE OF SAME
FILTRE À PARTICULES CATALYTIQUE ACTIF ET SON UTILISATION

(43) Veröffentlichungstag der Anmeldung: 07.08.2013
(73) Patentinhaber: Umicore AG & Co. KG, 63457 Hanau-Wolfgang (DE)
(72) Erfinder: Frantz, Stéphanie, 63457 Hanau (DE); Goebel, Ulrich, 65795 Hattersheim (DE); Dornhaus, Franz, 63110 Rodgau (DE); Schiffer, Michael, 63450 Hanau (DE)

(56) Entgegenhaltungen:
- EP-A1- 2 042 225
- EP-A1- 2 112 339
- WO-A1-2011/057649
- DE-A1-102004 040 549
- DE-A1-102008 042 243
- JP-A- 2008 264 636
- US-A1- 2006 057 046
- US-A1- 2011 123 421
- US-B1- 7 062 904

## Beschreibung

Die Erfindung betrifft ein katalytisch aktives Partikelfilter und dessen Verwendung zur Reinigung der Abgase von Dieselmotoren, insbesondere als Bestandteil eines Abgasreinigungssystems enthaltend einen Dieseloxidationskatalysator, ein Dieselpartikelfilter und einen Katalysator zur selektiven katalytischen Reduktion von Stickoxiden, die in dieser Reihenfolge in Strömungsrichtung des Abgases hintereinander geschaltet sind.

Das Rohabgas von Dieselmotoren enthält neben Kohlenmonoxid CO, Kohlenwasserstoffen HC und Stickoxiden NOₓ einen relativ hohen Sauerstoffgehalt von bis zu 15 Vol.-%. Außerdem sind Partikelemissionen enthalten, die überwiegend aus Russrückständen und gegebenenfalls organischen Agglomeraten bestehen und aus einer partiell unvollständigen Kraftstoffverbrennung im Zylinder herrühren.

Die Einhaltung künftig in Europa, Nordamerika und Japan geltender gesetzlicher Abgasgrenzwerte für Dieselfahrzeuge erfordert die gleichzeitige Entfernung von Partikeln und Stickoxiden aus dem Abgas. Die Schadgase Kohlenmonoxid und Kohlenwasserstoffe können aus dem mageren Abgas durch Oxidation an einem geeigneten Oxidationskatalysator unschädlich gemacht werden. Zur Entfernung der Partikelemissionen sind Dieselpartikelfilter mit und ohne zusätzliche katalytisch aktive Beschichtung geeignete Aggregate. Die Reduktion der Stickoxide zu Stickstoff ("Entstickung" des Abgases) ist wegen des hohen Sauerstoffgehaltes schwieriger. Ein bekanntes Verfahren ist die selektive katalytische Reduktion (Selective Catalytic Reduktion SCR) der Stickoxide an einem geeigneten Katalysator, kurz SCR-Katalysator. Dieses Verfahren gilt gegenwärtig für die Entstickung von Dieselmotorenabgasen als bevorzugt. Die Verminderung der im Abgas enthaltenden Stickoxide erfolgt im SCR-Verfahren unter Zuhilfenahme eines aus einer externen Quelle in den Abgasstrang eindösierten Reduktionsmittels. Als Reduktionsmittel wird bevorzugt Ammoniak eingesetzt, wobei insbesondere Ammoniak freisetzende Verbindungen wie beispielsweise Harnstoff oder Ammoniumcarbamat eindosiert werden. Das also gegebenenfalls aus der Vorläuferverbindung in situ erzeugte Ammoniak reagiert am SCR-Katalysator mit den Stickoxiden aus dem Abgas in einer Komproportionierungsreaktion zu Stickstoff und Wasser.

Derzeit ist eine Kombination der verschiedenen Abgasreinigungsaggregate unumgänglich, um den aufkommenden gesetzlichen Vorgaben gerecht zu werden. Eine Vorrichtung zur Reinigung von Dieselmotorenabgasen muss mindestens einen oxidationsaktiven Katalysator und zur Entstickung einen SCR-Katalysator mit vorgeschalteter Einbringvorrichtung für Reduktionsmittel (bevorzugt Ammoniak oder Harnstofflösung) und externer Reduktionsmittelquelle (beispielsweise einen Zusatztank mit Harnstofflösung oder einen Ammoniakspeicher) enthalten. Falls es durch Optimierung der motorischen Verbrennung nicht gelingt, die Partikelemissionen so gering zu halten, dass diese über dem Oxidationskatalysator durch direkte Oxidation mit Sauerstoff entfernt werden können, ist zusätzlich der Einsatz eines Partikelfilters notwendig. Dabei ist auch der Einsatz speziell katalytisch aktivierter Partikelfilter vorstellbar. Ein solches Partikelfilter wird beispielsweise in der EP 1 486 248 A1 offenbart. Das Dieselpartikelfilter weist eine Einlassseite für einströmendes Abgas und eine Auslassseite für abströmendes Abgas auf. Es enthält ein Substrat mit einer inneren Wandoberfläche und einer äußeren Wandoberfläche. Auf der inneren Wandoberfläche der Einlassseite ist eine erste katalytisch aktive Beschichtung aufgebracht, während auf der äußeren Wandoberfläche zur Auslassseite hin eine zweite katalytisch aktive Beschichtung appliziert ist. Die katalytisch aktiven Beschichtungen können verschiedene Zusammensetzungen und unterschiedliche katalytische Funktionen aufweisen.

Abgasreinigungssysteme, die aus mehreren hintereinander geschalteten Abgasreinigungsaggregaten aufgebaut sind, sind im Stand der Technik gut bekannt; einige befinden sich derzeit in der praktischen Erprobung oder in der Serieneinführung. So beschreibt die EP 1 054 722 A1 ein System zur Behandlung von NOₓ- und partikelhaltigen Dieselabgasen, worin ein Oxidationskatalysator einem Partikelfilter vorgeschaltet ist. Abströmseitig zum Partikelfilter sind eine Reduktionsmittelquelle und eine Dosiereinrichtung für das Reduktionsmittel, sowie ein SCR-Katalysator angeordnet. Im hier beschriebenen Verfahren wird der NO₂-Anteil im Abgas und somit das NO₂/NOₓ-Verhältnis durch wenigstens teilweise Oxidation von NO am Oxidationskatalysator erhöht, wobei das NO/NO₂-Verhältnis bevorzugt auf "sein vorbestimmtes, für den SCR-Katalysator optimales Niveau eingestellt wird".

Dieses für den SCR-Katalysator optimale NO/NO₂-Verhältnis liegt für alle derzeit bekannten SCR-Katalysatoren um 1. Besteht das im Abgas enthaltene NOₓ nur aus NO und NO₂, so liegt das optimale NO₂/NOₓ-Verhältnis zwischen 0,3 und 0,7, bevorzugt zwischen 0,4 und 0,6 und besonders bevorzugt bei 0,5. Ob dieses Verhältnis vor dem SCR-Katalysator in einem System nach EP 1 054 722 A1 erreicht wird, hängt von der Abgastemperatur und somit vom Betriebszustand des Motors, von der Aktivität des Oxidationskatalysators, der Edelmetallbeladung und der Ausgestaltung und Russbeladung des dem Oxidationskatalysator nachgeschalteten Dieselpartikelfilters ab. Die Tatsache, dass das NO/NO₂,-Verhältnis im Abgas über dem Oxidationskatalysator eingestellt werden soll, wobei das so konfigurierte Abgas vor Erreichen des SCR-Katalysators noch das nachgeschaltete Dieselpartikelfilter durchfließen muss, bewirkt, dass im dynamischen Regelbetrieb des Fahrzeugs nicht durchgehend sichergestellt werden kann, dass das NO/NO₂-Verhältnis im Abgas nach Partikelfilter und vor SCR-Katalysator immer im für die SCR-Reaktion optimalen Bereich liegt. NOₓ-Durchbrüche infolge unvollständiger Reduktion und/oder Ammoniak-Durchbrüche infolge von Ammoniak-Überdosierungen sind die Folge.

Die WO 2009/140989 löst dieses Problem durch den Einsatz eines katalytisch aktivierten Partikelfilters in einem System nach EP 1 054 722 A1 bei gleichzeitiger Anpassung der katalytischen Beschichtung des vorgeschalteten Oxidationskatalysators. In einer Vorrichtung zur Reinigung von Dieselabgasen, die in Strömungsrichtung des Abgases einen Oxidationskatalysator, ein Dieselpartikelfilter mit katalytisch aktiver Beschichtung, eine Einbringvorrichtung für ein Reduktionsmittel aus einer externen Reduktionsmittelquelle und einen SCR-Katalysator umfasst, enthalten sowohl der Oxidationskatalysator als auch die katalytisch aktive Beschichtung des Dieselpartikelfilters Palladium und Platin. Das Verhältnis der Gesamtmenge an Palladium zur Gesamtmenge an Platin in Oxidationskatalysator und Partikelfilter liegt zwischen 8 : 1 und 1 : 15. Zugleich ist das Verhältnis von Platin zu Palladium im Oxidationskatalysator nicht größer als 6 : 1, während die katalytisch aktive Beschichtung des Dieselpartikelfilters so gewählt ist, dass das darin vorliegende Verhältnis von Platin zu Palladium nicht geringer ist als 10 : 1.

Aus der aktuellen Dieselmotoren- und Applikationsentwicklung ist erkennbar, dass das zu reinigende Abgas künftiger Dieselmotoren, wenn es den Motor verlässt und in die Abgasreinigungsanlage eintritt, immer kälter wird. Die Vermeidung zusätzlicher Wärmeverluste über den Abgasstrang erfordert eine immer kompaktere Bauweise des Abgasreinigungssystems. Infolgedessen wird das für den vorgeschalteten Oxidationskatalysator zur Verfügung stehende Bauvolumen immer geringer. Die geringere Dimensionierung des Oxidationskatalysators in Verbindung mit der Absenkung der Regelbetriebstemperatur hat zur Folge, dass die im zu reinigenden Abgas enthaltenden Kohlenwasserstoffe und Kohlenmonoxid am Oxidationskatalysator oft nicht mehr vollständig zu Kohlendioxid umgesetzt werden können. Zudem ist der Oxidationskatalysator unter diesen Bedingungen nicht in der Lage, ein NO/NO₂-Verhältnis einzustellen, dass auch nur annähernd optimal ist für eine Entstickung des Abgases in einem am Ende des Abgasstranges befindlichen SCR-Katalysator. Infolgedessen sind die im Abgas verbleibenden Restemissionen an Kohlenmonoxid und insbesondere an Kohlenwasserstoffen, aber auch an besonders umweltkritischen Stickoxiden zu hoch, um die zukünftig geltenden Abgasgrenzwerte erfüllen zu können.

Es ist Aufgabe der vorliegenden Erfindung, ein Abgasreinigungsaggregat zur Reinigung der Abgase von Dieselmotoren zur Verfügung zu stellen, das sich zum Einsatz in einem Abgasreinigungssystem mit Dieseloxidationskatalysator, Dieselpartikelfilter und SCR-Katalysator eignet, ohne dass die vorstehend genannten Nachteile herkömmlicher Systeme auftreten.

Diese Aufgabe wird gelöst durch ein katalytisch aktives Partikelfilter, das Russpartikel aus dem Abgas entfernt und Kohlenmonoxid und Kohlenwasserstoff zu oxidieren, sowie Stickstoffmonoxide wenigstens anteilig zu Stickstoffdioxid umzusetzen vermag.

Gegenstand der vorliegenden Erfindung ist ein katalytisch aktives Partikelfilter umfassend
- ein Wandflussfiltersubstrat (3), das durch poröse Wände (7) getrennte An- und Abströmkanäle umfasst, wobei die abströmseitigen Enden der Anströmkanäle (4) und die anströmseitigen Enden der Abströmkanäle (5) gasdicht verschlossen sind (6), als Filterkörper und
- mindestens zwei katalytisch aktiven Beschichtungen, wobei die erste katalytisch aktive Beschichtung (1) Platin und Palladium enthält und sich in den porösen Wänden (7) zwischen Anström- und Abströmkanälen befindet und die zweite katalytisch aktive Beschichtung (2) Palladium und Platin enthält und sich in den Abströmkanälen auf den porösen Wänden (7) zwischen Anström- und Abströmkanälen befindet,
wobei der Platingehalt der zweiten katalytisch aktiven Beschichtung (2) höher ist, als der Platingehalt der ersten katalytisch aktiven Beschichtung (1).

Gegenstand der vorliegenden Erfindung ist des Weiteren ein Verfahren zur Verminderung von Partikeln, Kohlenwasserstoffen und Kohlenmonoxid in Dieselmotorenabgasen, wobei das zu reinigende Abgas enthaltend Kohlenmonoxid, Kohlenwasserstoffe, Partikel und Stickoxide einschließlich Stickstoffmonoxid durch ein erfindungsgemäßes katalytisch aktives Partikelfilter geleitet wird.

Das erfindungsgemäße katalytisch aktive Partikelfilter ist für den Einsatz in einem Abgassystem optimiert, das anströmseitig dazu einen Dieseloxidationskatalysator, sowie abströmseitig dazu eine Vorrichtung zur Eindosierung von Ammoniak oder einer Ammoniak freisetzenden Verbindung und einen SCR-Katalysator zur Umsetzung von Stickoxiden mit Ammoniak zu Stickstoff enthält.

Gegenstand der vorliegenden Erfindung ist somit auch ein Abgasreinigungssystem, das in Strömungsrichtung des Abgases einen Oxidationskatalysator, ein Dieselpartikelfilter mit katalytisch aktiver Beschichtung, eine Einbringvorrichtung für ein Reduktionsmittel aus einer externen Reduktionsmittelquelle und einen SCR-Katalysator umfasst, das dadurch gekennzeichnet ist, dass es als Dieselpartikelfilter mit katalytisch aktiver Beschichtung ein erfindungsgemäßes katalytisch aktives Partikelfilter enthält.

Bevorzugt weist die erste katalytisch aktive Beschichtung (1) ein Pt : Pd-Gewichtsverhältnis von 1 : 4 bis 2 : 1 auf.

In einer besonderen Ausführungsform des erfindungsgemäßen katalytisch aktiven Partikelfilters enthält die erste katalytisch aktive Beschichtung eine oder mehrere Zeolith-Verbindungen, die gegenüber den im Dieselabgas vorkommenden Kohlenwasserstoffen eine speichernde Wirkung zeigen. Diese sind bevorzugt ausgewählt aus der Gruppe der beta-Zeolithe, der X-Zeolithe, der Y-Zeolithe, der Mordenite und ZSM-5-Zeolithe.

Die genannten Zeolith-Verbindungen werden bevorzugt in Mengen von 0,5 bis 20 g/l Volumen des Wandflussfiltersubstrates eingesetzt.

Bevorzugt erstreckt sich die erste katalytisch aktive Beschichtung (1) über die Gesamtlänge des Wandflussfiltersubstrates.

Die Zusammensetzung der ersten katalytisch aktiven Beschichtung ist so gewählt, dass sie auch bei moderaten Abgastemperaturen die Oxidation von Kohlenwasserstoffen und Kohlenmonoxiden zu Kohlendioxid möglichst vollständig katalysiert. Dadurch wird gewährleistet, dass Kohlenmonoxid und Kohlenwasserstoffe, welche durch einen gegebenenfalls vorgeschalteten Dieseloxidationskatalysator "durchbrechen", spätestens an dieser Stelle im Abgasreinigungssystem möglichst vollständig zu Kohlendioxid oxidiert und demzufolge nicht in die Umwelt entlassen werden.

Die zweite katalytisch aktive Beschichtung (2) weist einen höheren Platingehalt auf, als die erste katalytisch aktive Beschichtung (1). Bevorzugt ist der Platingehalt der zweiten katalytisch aktiven Beschichtung (2) 1,2 bis 3 mal so hoch, wie der Platingehalt in der ersten katalytisch aktiven Beschichtung (1).

Bevorzugt enthält die zweite katalytisch aktive Beschichtung (2) mehr Platin als Palladium. Besonders bevorzugt liegt das Pt: Pd-Gewichtsverhältnis bei mehr als 6 : 1, besonders bevorzugt bei 12 : 1. In Ausführungsformen, in denen die zweite katalytisch aktive Beschichtung (2) eine besonders hohe Oxidationskraft gegenüber Stickstoffmonoxid benötigt, kann diese nur Platin enthalten und frei sein von Palladium (Gewichtsverhältnis 1 : 0).

Bevorzugt erstreckt sich die zweite katalytisch aktive Beschichtung (2) über die Gesamtlänge des Wandflussfiltersubstrates.

Die zweite katalytisch aktive Beschichtung (2) ist so zusammengesetzt, dass sie in der Lage ist, mindestens einen Teil des im Abgas enthaltenen Stickstoffmonoxids zu Stickstoffdioxid zu oxidieren, um so in Summe eine größere NO₂-Menge für den nachgeschalteten SCR-Katalysator zur Verfügung zu stellen. Dadurch wird sichergestellt, dass das Abgas - je nach Abgastemperatur und Edelmetallbeladung - nach Durchleitung durch das erfindungsgemäße katalytisch aktive Partikelfilter ein NO₂/NOₓ-Verhältnis von 0,3 zu 0,7, bevorzugt von 0,4 zu 0,6 und besonders bevorzugt von 0,5 aufweist.

Das in den beiden katalytisch aktiven Beschichtungen enthaltene Platin und Palladium liegt in der Regel auf einem oxidischen Trägermaterial vor, das aus der Gruppe bestehend aus Aluminiumoxid, Siliziumdioxid, Seltenerdoxide, Titanoxid und Zirkonoxid sowie Mischoxide oder Mischungen davon ausgewählt ist. Ein bevorzugtes oxidisches Trägermaterial ist Aluminiumoxid, das insbesondere mit Lanthanoxid stabilisiert ist. In letztgenanntem Fall liegt Lanthanoxid bevorzugt in Mengen von 2 bis 6 Gew.-%, bezogen auf das stabilisierte Aluminiumoxid, vor.

Die räumliche Trennung der beiden katalytisch aktiven Beschichtungen gemäß vorliegender Erfindung bewirkt überraschenderweise eine in Summe verbesserte Konvertierung aller Schadgase. Insbesondere führt sie dazu, dass die über das Gesamtbauteil beobachtete NO-Konvertierung zu NO₂ gegenüber herkömmlichen Bauteilen, in denen die katalytisch wirksamen Bestandteile in einer einzigen Beschichtung vorliegen, signifikant erhöht ist.

Das Wandflussfiltersubstrat besteht bevorzugt aus keramischem Material wie beispielsweise Cordierit, Siliziumcarbid oder Aluminiumtitanat.

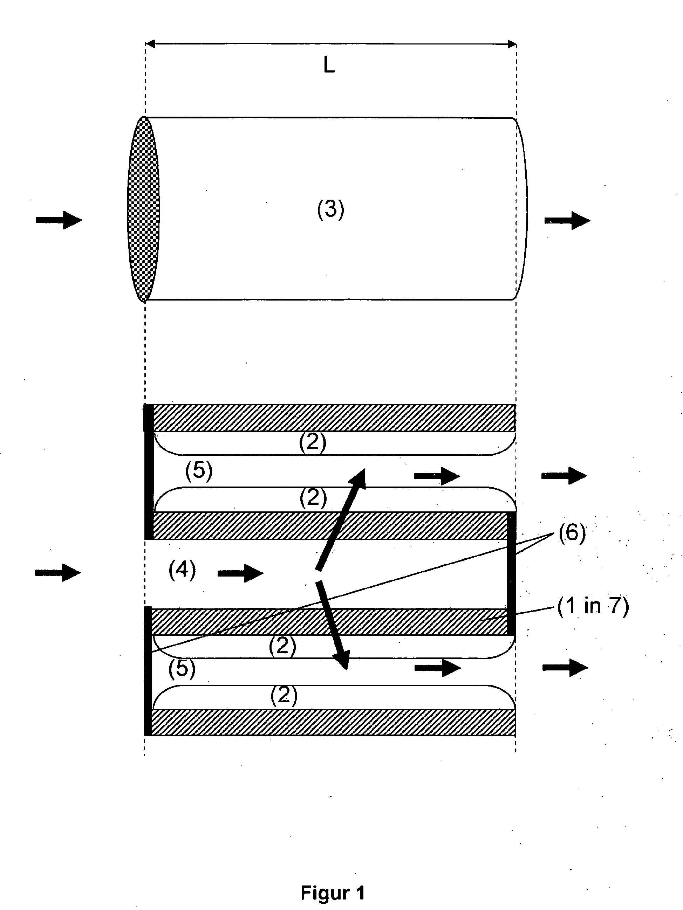

Figur 1 stellt das erfindunsgemäße katalytisch aktive Partikelfilter schematisch dar. Die erste katalytisch aktive Beschichtung (1) ist anströmkanalseitig in die porösen Wände zwischen Anströmkanälen (4) und Abströmkanälen (5) eingebracht. Die zweite katalytisch aktive Beschichtung (2) ist abströmkanalseitig auf die Wände zwischen Anströmkanälen (4) und Abströmkanälen (5) aufgebracht.

Die Russpartikel können die porösen Wände nicht durchdringen und werden vollständig anströmseitig aus dem Abgas herausgefiltert. Dies hat den Vorteil, dass die zweite katalytisch aktive Beschichtung, die zur NO-Oxidation eingesetzt wird, russfrei bleibt.

Das erfindungsgemäße katalytisch aktive Partikelfilter ist besonders zum Einsatz in einem Verfahren zur Verminderung von Partikeln, Kohlenwasserstoffen und Kohlenmonoxid geeignet, wobei das zu reinigende Abgas neben den vorstehend genannten Komponenten auch Stickoxide einschließlich Stickstoffmonoxid enthält. Die erste katalytisch aktive Beschichtung (1) ist wirksam, um Kohlenwasserstoffe und Kohlenmonoxid zu oxidieren, während die zweite katalytisch aktive Beschichtung (2) wirksam ist, um mindestens ein Teil des im Abgas vorhandenen Stickstoffmonoxids zu Stickstoffdioxid umzusetzen. Nach dem erfindungsgemäßen Verfahren werden im zu reinigende Abgas nicht nur Kohlenwasserstoffe, Kohlenmonoxid und Partikel vermindert. Es wird zugleich das NO₂/NOₓ-Verhältnis im Abgas auf einen Wert von 0,3 bis 0,7 eingestellt. Somit wird das Abgas auf optimale Weise für die Entfernung der Stickoxide durch Komproportionierung mit Ammoniak an einem nachgeschalteten SCR-Katalysator vorbereitet.

Zur nachfolgenden Entstickung des Abgases werden dem erfindungsgemäßen katalytisch aktiven Partikelfilter bevorzugt in dieser Reihenfolge (a) eine Vorrichtung zur Eindosierung von Ammoniak oder einer Ammoniak freisetzenden Verbindung und (b) ein SCR-Katalysator, der wirksam ist, um Stickoxide mit Ammoniak zu Stickstoff umzusetzen, nachgeschaltet. Die Gesamtreinigungswirkung des Verfahrens wird weiter erhöht, wenn dem erfindungsgemäßen katalytisch aktiven Partikelfilter weiterhin ein Oxidationskatalysator vorgeschaltet ist, der wirksam ist, um Kohlenmonoxid und Kohlenwasserstoffe zu oxidieren.

In der Gesamtheit resultiert ein hochwirksames Abgasreinigungsystem zur Verminderung von Kohlenwasserstoffen, Kohlenmonoxid, Partikeln und Stickoxiden aus dem Abgas von Dieselmotoren, das sich durch eine gegenüber Systemen nach dem Stand der Technik erheblich verbesserte Reinigungseffizienz auszeichnet. Insbesondere eignet sich das erfindungsgemäße System zur Reinigung der Abgase neuerer Dieselmotoren, deren Abgase vergleichsweise niedrige Temperaturen aufweisen.

Die Erfindung wird nachfolgend anhand einiger Beispiele und Figuren näher erläutert. Es zeigen:
**Figur 1****:** Schematische Darstellung eines erfindungsgemäßen katalytisch aktiven Partikelfilters umfassend:
   (1) eine erste katalytisch aktive Beschichtung, die wirksam ist, um Kohlenwasserstoffe und Kohlenmonoxid zu oxidieren;
   (2) eine zweite katalytisch aktive Beschichtung, die wirksam ist, um mindestens einen Teil des im Abgas vorhandenen Stickstoffmonoxid zu Stickstoffdioxid umzusetzen;
   (3) ein Wandflussfiltersubstrat als Filterkörper, umfassend:
   (4) Anströmkanäle, durch das Abgas in das Substrat einströmt;
   (5) Abströmkanäle, durch die das Abgas aus dem Substrat herausströmt; wobei
   (6) sowohl Anströmkanäle als auch Abströmkanäle jeweils einseitig gasdicht verschlossen sind.

### Beispiel:

Zur Herstellung eines erfindungsgemäßen Partikelfilters wurde ein Wandflussfiltersubstrat aus Siliziumcarbid mit den Beschichtungen (1) und (2) versehen, wie dies in Figur 1 schematisch dargestellt ist. Das Substrat hatte einen Durchmesser von 143,8 Millimetern und eine Länge von 152,4 Millimetern. Es wies eine Zelldichte von 300 Zellen pro Quadratzentimetern bei einer Wandstärke von 0,33 Millimetern auf. Gesamt-Zielbeladung war 35,4 g/ft³ mit einem Pt/Pd-Verhältnis von 6,1.1.
a) Zunächst wurde eine Beschichtungssuspension zur Anfertigung der für die Oxidation von Kohlenwasserstoffen und Kohlendioxid geeigneten Beschichtung (1) hergestellt. Hierzu wurde ein Lanthanoxid-stabilisiertes Aluminiumoxid (4 Gew -% La₂O₃ bezogen auf die Gesamtmasse des Mischoxids, BET-Oberfläche ca. 180 m²/g) mit einer wässrigen Lösung von Tetraaminplatinacetat und Tetraaminpalladiumnitrat porenfüllend befeuchtet, wobei die Rieselfähigkeit des Pulvers erhalten blieb

Dabei wurden Edelmetallgehalt der Lösung und Edelmetallverhältnis entsprechend der zu erreichenden Zielmenge bzw. des zu erreichenden Edelmetallverhältnisses in der Beschichtungen (1) gewählt. Zielbeladung war 15 g/ft³ mit einem Pt/Pd-Verhältnis von 2,1:1.

Zur Fixierung des Edelmetalls wurde das Feuchtpulver für die Dauer von 4 Stunden bei 300 °C kalziniert.

Das so erhaltene katalytisch aktivierte Pulver wurde in Wasser suspendiert, mit einem Zeolithen versehen und nach pH-Einstellung vermahlen, bis sie eine Partikelgrößenverteilung mit einem d₁₀₀-Wert von weniger als 7 Mikrometern aufwies. Die Beschichtung des Wandflussfiltersubstrats erfolgte teilmaschinell. Hierzu wurde das Filtersubstrat in der Beschichtungskammer einer Beschichtungsmaschine nach dem Stand der Technik senkrecht ausgerichtet, so dass die Eintrittsfläche der späteren Anströmseite des Bauteils nach unten zeigte. Dann wurde die Beschichtungssuspension (1) von unten in das Substrat eingepumpt, bis die Anströmkanäle des Substrats über dessen gesamte Länge mit Suspension gefüllt waren. Dann wurde die Beschichtungssuspension (1) von unten wieder herausgepumpt und anschließend abgesaugt, wobei die Abpump- bzw. Absaugleistung so gewählt wurde, dass der in der Suspension enthaltene Feststoffanteil in gewünschter Menge in den Kanalwänden des Wandflussfiltersubstrats verblieb.

Dabei wurde eine aufzubringende Beschichtungsmenge von 15-20 Gramm pro Liter, bezogen auf das Substratvolumen, gewählt und in die Wand des Wandflussfiltersubstrates eingebracht.
b) Für die Anfertigung der zur mindestens teilweisen Oxidation von NO geeigneten Beschichtung (2) wurde analog zu oben genanntem Verfahren vorgegangen. Der für Beschichtung (2) vorgesehene Washcoat wird auf eine Teilchengröße von 8-10 Mikrometern (d₁₀₀) gemahlen und per Tauchbeschichtungsverfahren vom Auslassende des Wandflussfiltersubstrates auf die Wand des Auslasskanals aufgebracht. Die Zielbeladung von Beschichtung (2) betrug 20,4 g/ft³ mit einem Pt/Pd-Verhältnis von 1:0.

Der resultierende katalytisch aktivierte Dieselpartikelfilter wurde für die Dauer von 4 Stunden bei 300°C kalziniert und anschließend bei 500 ° C für die Dauer von 2 Stunden mit Formiergas behandelt.

Der so erhaltene katalytisch aktive Partikelfilter wurde vor Charakterisierung einer synthetischen Alterungsprozedur unterzogen. Dazu wurden die Filterkörper in einem Ofen bei 800° C für die Dauer von 16 Stunden einer Atmosphäre aus 10 Vol - % Wasserdampf und 10 Vol -% Sauerstoff in Stickstoff ausgesetzt

### Vergleichsbeispiele 1 und 2:

Als Vergleich wurden zwei Wandflussfiltersubstrate in herkömmlicher Weise beschichtet, d.h. die gesamte Beladung wurde homogen in die Kanalwände des Substrates eingebracht. Die Beschichtung entspricht somit Beschichtung (1) des erfindungsgemäßen Partikelfilters gemäß Beispiel, enthält aber die gesamte Edelmetallmenge.

Zunächst wurden Beschichtungssuspensionen hergestellt. Hierzu wurde ein Lanthanoxid-stabilisiertes Aluminiumoxid (4 Gew -% La₂O₃ bezogen auf die Gesamtmasse des Mischoxids, BET-Oberfläche ca. 180 m²/g) mit einer wässrigen Lösung von Tetraaminplatinacetat und Tetraaminpalladiumnitrat porenfüllend befeuchtet, wobei die Rieselfähigkeit des Pulvers erhalten blieb. Edelmetallgehalt der Lösung und Edelmetallverhältnis wurden entsprechend der zu erreichenden Zielmengen und -Verhältnisse gewählt. Zielbeladung von Vergleichsbeispiel 1 war 34 g/ft³ mit einem Pt/Pd-Verhältnis von 12:1 (Kostenäquivalenz), von Vergleichsbeispiel 2 40 g/ft³ und einem Pt/Pd-Verhältnis von 2:1.

Zur Fixierung des Edelmetalls wurde das Feuchtpulver für die Dauer von 4 Stunden bei 300 °C kalziniert.

Das so erhaltene katalytisch aktivierte Pulver wurde in Wasser suspendiert, mit einem Zeolithen versehen und nach pH-Einstellung vermahlen, bis sie eine Partikelgrößenverteilung mit einem d₁₀₀-Wert von weniger als 7 Mikrometern aufwies.

Die Beschichtung der Wandflussfiltersubstrate erfolgte teilmaschinell. Hierzu wurde das Filtersubstrat in der Beschichtungskammer einer Beschichtungsmaschine nach dem Stand der Technik senkrecht ausgerichtet, so dass die Eintrittsfläche der späteren Anströmseite des Bauteils nach unten zeigte. Dann wurde die jeweilige Beschichtungssuspension von unten in das Substrat eingepumpt, bis die Anströmkanäle des Substrats über dessen gesamte Länge mit Suspension gefüllt waren. Die Beschichtungssuspension wurde sodann von unten wieder herausgepumpt und anschließend abgesaugt, wobei die Abpump- bzw. Absaugleistung so gewählt wurde, dass der in der Suspension enthaltene Feststoffanteil in gewünschter Menge in den Kanalwänden des Wandflussfiltersubstrats verblieb.

Dabei wurde eine aufzubringende Beschichtungsmenge von 15-20 Gramm pro Liter, bezogen auf das Substratvolumen, gewählt und in die Wand des DPF eingebracht.

Die Vergleichsmuster weisen eine Beladung von 34 g/ft³ bzw. 40 g/ft³ mit einem Edelmetallverhältnis von Pt/Pd von 12:1 bzw. 2:1 auf. Diese Beladungen sind kosten-äquivalent zu dem in Beispiel 1 beschriebenen katalytisch aktiven Partikelfilter.

Die so erhaltenen Vergleichsfilter wurden analog zu den Angaben in Beispiel 1 hydrothermal gealtert.

### Vergleichsversuch

Das erfindungsgemäße katalytisch aktive Partikelfilter gemäß Beispiel 1 und die Vergleichsfilter gemäß Vergleichsbeispielen wurden nach oben beschriebener hydrothermaler Alterung nacheinander in einem DPF-Canning mit dem Abgasstrang eines 2,0-Liter Dieselmotors der Norm Euro 4 verbunden und jeweils mit ca. 8 g/l Russ beaufschlagt. Nach Beendigung des Berussungsvorganges wurde eine Temperaturrampe bis ca. 300 °C gefahren und der sog. Light Off des Partikelfilters sowie die NO₂-Bildung vermessen.

Das erfindungsgemäße katalytisch aktive Partikelfilter weist - bei gleicher HC/CO-Performance - eine um 30% (relativ) höhere NO₂-Bildung nach Berussung auf als die konventionell beschichteten Vergleichsfilter. Das erfindungsgemäße katalytisch aktive Partikelfilter liefert somit bei gleichen Edelmetallkosten eine erheblich bessere Performance auf.

## Patentansprüche

1. Katalytisch aktives Partikelfilter umfassend
• ein Wandflussfiltersubstrat (3), das durch poröse Wände (7) getrennte An- und Abströmkanäle umfasst, wobei die abströmseitigen Enden der Anströmkanäle (4) und die anströmseitigen Enden der Abströmkanäle (5) gasdicht verschlossen sind (6), als Filterkörper und
• mindestens zwei katalytisch aktiven Beschichtungen, wobei die erste katalytisch aktive Beschichtung (1) Platin und Palladium enthält und sich in den porösen Wänden zwischen Anström- und Abströmkanälen befindet und die zweite katalytisch aktive Beschichtung (2) Palladium und Platin enthält und sich in den Abströmkanälen auf den porösen Wänden zwischen Anström- und Abströmkanälen befindet,
wobei der Platingehalt der zweiten katalytisch aktiven Beschichtung (2) höher ist, als der Platingehalt der ersten katalytisch aktiven Beschichtung (1).

2. Katalytisch aktives Partikelfilter nach Anspruch 1, **dadurch gekennzeichnet, dass** die erste katalytisch aktive Beschichtung (1) ein Pt: Pd-Gewichtsverhältnis von 1 : 4 bis 2 : 1 aufweist.

3. Katalytisch aktives Partikelfilter nach Anspruch 1 und/oder 2, **dadurch gekennzeichnet, dass** die erste katalytisch aktive Beschichtung (1) ein oder mehrere Zeolithverbindungen enthält.

4. Katalytisch aktives Partikelfilter nach einem oder mehreren der Ansprüche 1 bis 3, **dadurch gekennzeichnet, dass** sich die erste katalytisch aktive Beschichtung (1) über die gesamte Länge des Wandflussfiltersubstrates erstreckt.

5. Katalytisch aktives Partikelfilter nach einem oder mehreren der Ansprüche 1 bis 4, **dadurch gekennzeichnet, dass** die zweite katalytisch aktive Beschichtung (2) mehr Platin als Palladium enthält.

6. Katalytisch aktives Partikelfilter nach einem oder mehreren der Ansprüche 1 bis 5, **dadurch gekennzeichnet, dass** die zweite katalytisch aktive Beschichtung (2) ein Pt : Pd-Gewichtsverhältnis von mehr als 6 : 1 aufweist.

7. Katalytisch aktives Partikelfilter nach einem oder mehreren der Ansprüche 1 bis 6, **dadurch gekennzeichnet, dass** sich die zweite katalytisch aktive Beschichtung (2) über die gesamte Länge des Wandflussfiltersubstrates erstreckt.

8. Katalytisch aktives Partikelfilter nach einem oder mehreren der Ansprüche 1 bis 7, **dadurch gekennzeichnet, dass** als Filterkörper (3) ein Wandflussfiltersubstrat aus keramischem Material eingesetzt wird.

9. Verfahren zur Verminderung von Partikeln, Kohlenwasserstoffen und Kohlenmonoxid in Dieselmotorenabgasen, wobei das zu reinigende Abgas enthaltend Kohlenmonoxid, Kohlenwasserstoffe, Partikel und Stickoxide einschließlich Stickstoffmonoxid durch ein katalytisch aktives Partikelfilter gemäß einem oder mehreren der Ansprüche 1 bis 8 geleitet wird.

10. Verfahren nach Anspruch 9, **dadurch gekennzeichnet, dass** das Abgas nach Durchleitung durch das katalytisch aktive Partikelfilter ein NO₂/NOₓ-Verhältnis von 0,3 bis 0,7 aufweist.

11. Verfahren nach Anspruch 9 und/oder 10, **dadurch gekennzeichnet, dass** dem katalytisch aktiven Partikelfilter in dieser Reihenfolge
(a) eine Vorrichtung zur Eindosierung von Ammoniak oder einer Ammoniak freisetzenden Verbindung und
(b) ein SCR-Katalysator, der wirksam ist, um Stickoxide mit Ammoniak zu Stickstoff umzusetzen,
nachgeschaltet sind.

12. Verfahren nach einem oder mehreren der Ansprüche 9 bis 11, **dadurch gekennzeichnet, dass** dem katalytisch aktiven Partikelfilter ein Oxidationskatalysator, der wirksam ist, um Kohlenmonoxid und Kohlenwasserstoffe zu oxidieren, vorgeschaltet ist.

13. Abgasreinigungssystem, das in Strömungsrichtung des Abgases einen Oxidationskatalysator, ein Dieselpartikelfilter mit katalytisch aktiver Beschichtung, eine Einbringvorrichtung für ein Reduktionsmittel aus einer externen Reduktionsmittelquelle und einen SCR-Katalysator umfasst, das **dadurch gekennzeichnet ist, dass** es als Dieselpartikelfilter mit katalytisch aktiver Beschichtung ein katalytisch aktives Partikelfilter nach einem der Ansprüche 1 bis 8 enthält.

## Claims

1. Catalytically active particulate filter comprising
• as a filter body, a wall flow filter substrate (3) which comprises inflow and outflow channels separated by porous walls (7), wherein the outflow ends of the inflow channels (4) and the inflow ends of the outflow channels (5) are sealed gas-tight (6), and
• at least two catalytically active coatings, wherein the first catalytically active coating (1) contains platinum and palladium and is situated in the porous walls between the inflow and outflow channels, and the second catalytically active coating (2) contains palladium and platinum and is situated in the outflow channels on the porous walls between the inflow and outflow channels,
wherein the platinum content of the second catalytically active coating (2) is higher than the platinum content of the first catalytically active coating (1).

2. Catalytically active particulate filter according to Claim 1, **characterized in that** the first catalytically active coating (1) has a Pt : Pd weight ratio of 1 : 4 to 2 : 1.

3. Catalytically active particulate filter according to Claim 1 and/or 2, **characterized in that** the first catalytically active coating (1) contains one or more zeolite compounds.

4. Catalytically active particulate filter according to one or more of Claims 1 to 3, **characterized in that** the first catalytically active coating (1) extends over the entire length of the wall flow filter substrate.

5. Catalytically active particulate filter according to one or more of Claims 1 to 4, **characterized in that** the second catalytically active coating (2) contains more platinum than palladium.

6. Catalytically active particulate filter according to one or more of Claims 1 to 5, **characterized in that** the second catalytically active coating (2) has a Pt : Pd weight ratio of more than 6 : 1.

7. Catalytically active particulate filter according to one or more of Claims 1 to 6, **characterized in that** the second catalytically active coating (2) extends over the entire length of the wall flow filter substrate.

8. Catalytically active particulate filter according to one or more of Claims 1 to 7, **characterized in that** a wall flow filter substrate of ceramic material is used as a filter body (3).

9. Method for reduction of particulates, hydrocarbons and carbon monoxide in diesel engine exhaust gases, wherein the exhaust gas to be cleaned containing carbon monoxide, hydrocarbons, particulates and nitrous oxides, including nitrogen monoxide, is passed through a catalytically active particulate filter according to one or more of Claims 1 to 8.

10. Method according to Claim 9, **characterized in that** after passing through the catalytically active particulate filter, the exhaust gas has a NO₂/NOₓ ratio of 0.3 to 0.7.

11. Method according to Claim 9 and/or 10, **characterized in that** downstream of the catalytically active particulate filter, in this order, are connected
(a) a device for metered addition of ammonium or a compound releasing ammonium, and
(b) an SCR catalyst which is effective to convert nitrous oxides with ammonium into nitrogen.

12. Method according to one or more of Claims 9 to 11, **characterized in that** upstream of the catalytically active particulate filter is connected an oxidation catalyst which is effective to oxidise carbon monoxide and hydrocarbons.

13. Exhaust gas cleaning system which in the flow direction of the exhaust gas comprises an oxidation catalyst, a diesel particulate filter with catalytically active coating, a device for introducing a reducing agent from an external reducing agent source, and an SCR catalyst, which is **characterized in that** it contains a catalytically active particulate filter according to one of Claims 1 to 8 as a diesel particulate filter with catalytically active coating.

## Revendications

1. Filtre à particules catalytiquement actif, comprenant :
un substrat (3) de filtre à écoulement sur les parois qui sert de corps de filtre et qui comporte des canaux d'amenée et des canaux d'évacuation séparés par des parois poreuses (7), les extrémités aval des canaux d'amenée (4) et les extrémités amont des canaux d'évacuation (5) étant fermées (6) de manière étanche aux gaz, et
au moins deux revêtements catalytiquement actifs, le premier revêtement (1) catalytiquement actif contenant du platine et du palladium et étant situé dans les parois poreuses séparant les canaux d'amenée et les canaux d'évacuation et le deuxième revêtement (2) catalytiquement actif contenant du palladium et du platine et étant situé dans les canaux d'évacuation sur les parois poreuses qui séparent les canaux d'amenée et les canaux d'évacuation,
la teneur en platine du deuxième revêtement catalytiquement actif (2) étant supérieure à la teneur en platine du premier revêtement catalytiquement actif (1) .

2. Filtre à particules catalytiquement actif selon la revendication 1, **caractérisé en ce que** le premier revêtement catalytiquement actif (1) présente un rapport pondéral Pt:Pd de 1:4 à 2:1.

3. Filtre à particules catalytiquement actif selon les revendications 1 et/ou 2, **caractérisé en ce que** le premier revêtement catalytiquement actif (1) contient un ou plusieurs composés de zéolithe.

4. Filtre à particules catalytiquement actif selon l'une ou plusieurs des revendications 1 à 3, **caractérisé en ce que** le premier revêtement catalytiquement actif (1) s'étend sur toute la longueur du substrat de filtre à écoulement sur les parois.

5. Filtre à particules catalytiquement actif selon l'une ou plusieurs des revendications 1 à 4, **caractérisé en ce que** le deuxième revêtement catalytiquement actif (2) contient plus de platine que de palladium.

6. Filtre à particules catalytiquement actif selon l'une ou plusieurs des revendications 1 à 5, **caractérisé en ce que** le deuxième revêtement catalytiquement actif (2) présente un rapport pondéral Pt:Pd supérieur à 6:1.

7. Filtre à particules catalytiquement actif selon l'une ou plusieurs des revendications 1 à 6 **caractérisé en ce que** le deuxième revêtement catalytiquement actif (2) s'étend sur toute la longueur du substrat de filtre à écoulement sur les parois.

8. Filtre à particules catalytiquement actif selon l'une ou plusieurs des revendications 1 à 7, **caractérisé en ce qu'**il utilise comme corps de filtre (3) un substrat de filtre à écoulement sur les parois en matériau céramique.

9. Procédé de diminution de la teneur en particules, en hydrocarbures et en monoxyde de carbone dans les gaz d'échappement de moteurs diesel, les gaz d'échappement à épurer contenant du monoxyde de carbone, des hydrocarbures, des particules et des oxydes d'azote, y compris du monoxyde d'azote, amenés à traverser un filtre à particules catalytiquement actif selon l'une ou plusieurs des revendications 1 à 8.

10. Procédé selon la revendication 9, **caractérisé en ce qu'**après avoir traversé le filtre à particules catalytiquement actif, le gaz d'échappement présente un rapport NO₂/NOₓ de 0,3 à 0,7.

11. Procédé selon les revendications 9 et/ou 10, **caractérisé en ce que** le filtre à particules catalytiquement actif est suivi dans l'ordre par
(a) un dispositif d'injection d'ammoniac ou d'un composé libérant de l'ammoniac et
(b) un catalyseur SCR actif pour convertir à l'aide d'ammoniac les oxydes d'azote en azote.

12. Procédé selon l'une ou plusieurs des revendications 9 à 11, **caractérisé en ce que** le filtre à particules catalytiquement actif est précédé par un catalyseur d'oxydation actif pour oxyder le monoxyde de carbone et les hydrocarbures.

13. Système d'épuration des gaz d'échappement qui comporte dans la direction d'écoulement des gaz d'échappement un catalyseur d'oxydation, un filtre à particules diesel doté d'un revêtement catalytiquement actif, un dispositif d'introduction d'un agent réducteur depuis une source externe d'agent réducteur et un catalyseur SCR, **caractérisé en ce qu'**il contient comme filtre à particules diesel à revêtement catalytiquement actif un filtre à particules catalytiquement actif selon l'une des revendications 1 à 8.
